# EUROPEAN PATENT APPLICATION

(11) **EP 1 020 284 A2**
(43) Date of publication of application: **19.07.2000**
(21) Application number: 00300151.8
(22) Date of filing: 11.01.2000
(51) Int. Cl.: B29D 30/60, B29D 30/72

(54) **Method of manufacturing rubber tyre component**

(30) Priority: 12.01.1999 JP 571599
(71) Applicant: SUMITOMO RUBBER INDUSTRIES LTD., Hyogo-ken (JP)
(72) Inventor: Tanaka,Yoshikazu, Aichi-ken (JP)
(74) Representative: Stewart, Charles Geoffrey

(57) **Abstract**

A method of manufacturing a rubber tyre component and a method of manufacturing a tyre are disclosed, wherein the rubber tyre component has a joint surface (P2 or P3), and the method comprises the steps of: dividing the cross sectional shape (5) of the rubber tyre component into a plurality of winding regions (An,Bn), the divided winding regions including (a) a region which includes the whole of the joint surface (P2) or (b) a plurality of regions each including a part of the joint surface but collectively including the whole of the joint surface (P2); and winding a raw rubber tape (2) to fill the winding regions so that edges (2e) of windings of the rubber tape are in line with the joint surface (P2).

## Description

The present invention relates to a method of manufacturing rubber tyre components such as sidewall rubber, tread rubber and the like.

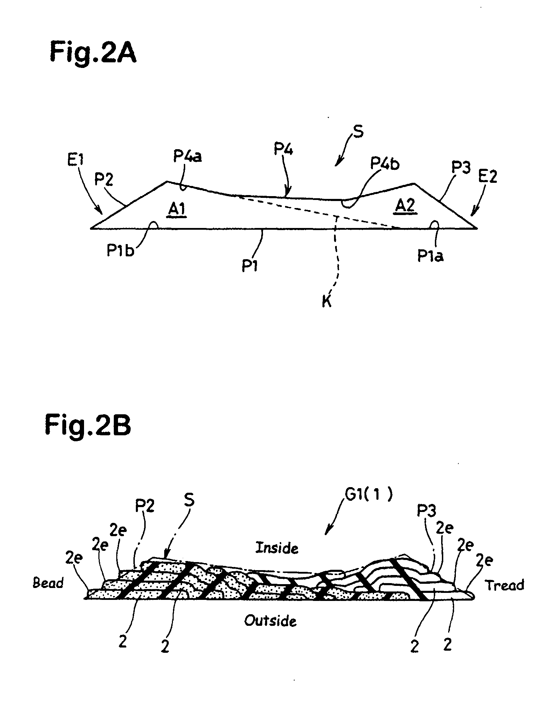

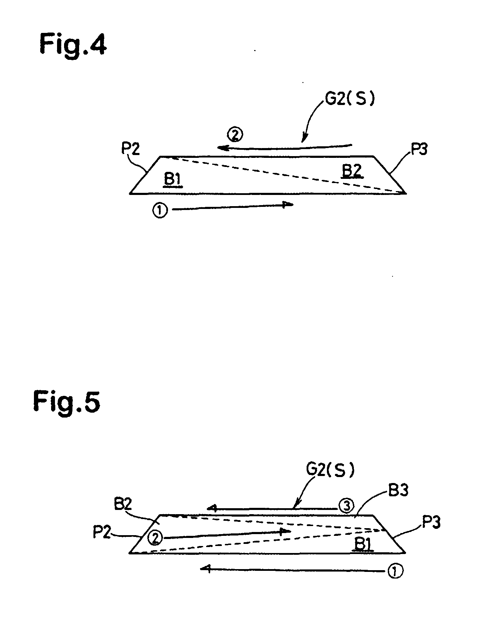

In general, unvulcanised rubber components for pneumatic tyres such as passenger car tyres are manufactured by means of an extruder, and the die thereof has a shape corresponding to the cross sectional shape of the rubber component. For example, a raw sidewall rubber has a cross sectional shape as shown in Fig.2A, and a raw tread rubber has a cross sectional shape as shown in Fig.4. Therefore, there are a large number of dies having different shapes and sizes and extruders in a tyre manufacturing plant.

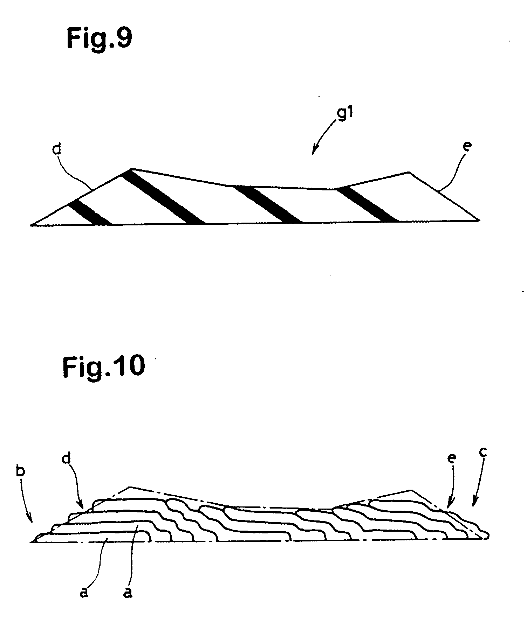

On the other hand, in the field of large-sized tyres for construction vehicles, as shown in Fig.10, it has been proposed to make a tread rubber by winding a rubber tape (a) continuously from one tread edge (b) to the other tread edge (c) for the reason that it is difficult to extrude a large-sized tyre component since a very high extruding pressure is required.

If this method is employed for making a tread rubber for relatively small sized tyres such as passenger car tyres, the difference of the contour of the wound tread rubber from the designed target shape (shown in Fig.10 by a chain line) becomes large. In particular, on the winding end side (c), the difference becomes large and as a result so called bareness of rubber is liable to occur when the component is used to form a tyre.

Further, in comparison with the large-sized tyres, small-sized tyres need dimensional accuracy of a high degree because the tyre size is small. However, during vulcanisation, the flow of rubber is limited due to the relatively low tyre inflation pressure.

If the size of the rubber tape is decreased, the difference of the contour may be decreased. But the working efficiency and production efficiency are greatly decreased, and high production cost is unavoidable.

Furthermore, when the dimensional accuracy is low, a latent shortage of rubber is liable to exist even in a finished tyre if bareness of rubber is visibly not observed. Thus, if this method is employed for making a sidewall rubber, as a sidewall rubber is repeatedly subjected to a large bending deformation, cracks are liable to occur at any position where bareness or relative lack of rubber occurs..

It is therefore, an object of the present invention to provide a method of manufacturing rubber tyre components, by which the components can be made with great accuracy without using an extremely small tape.

According to the present invention, a method of manufacturing a rubber tyre component having a joint surface comprises the steps of dividing the cross sectional shape of the rubber component into a plurality of winding regions, the divided winding regions including (a) a region which includes the whole of the joint surface, or (b) a plurality of regions each including a part of the joint surface but collectively the whole; and winding a raw rubber tape to fill the winding regions so that edges of windings of the rubber tape are in line with the joint surface.

Embodiments of the present invention will now be described in detail in conjunction with the accompanying drawings:
Fig.1 is a cross sectional view of a pneumatic tyre for explaining various rubber components;
Fig.2A shows an example of the target cross sectional shape of the sidewall rubber thereof;
Fig.2B is a cross sectional view of an example of the sidewall rubber manufactured according to the present invention;
Fig.3A and Fig.3B are cross sectional views for explaining a method of manufacturing the sidewall rubber shown in Fig.2B;
Fig.4 shows an example of the target cross sectional shape of the tread rubber together with an example of the sequence of winding a rubber tape;
Fig.5 shows another example of the division and winding sequence of the same tread rubber;
Fig.6 show an example of the target cross sectional shape of the clinch rubber component together with an example of the division thereof;
Fig.7 show another example of the division thereof;
Fig.8 is a diagram for explaining an example of the method of winding a plurality of rubber tapes at the same time;
Fig.9 is a cross sectional view of a sidewall rubber manufactured by means of conventional extrusion; and
Fig.10 is a cross sectional view of a sidewall rubber manufactured by applying the above-mentioned prior art.

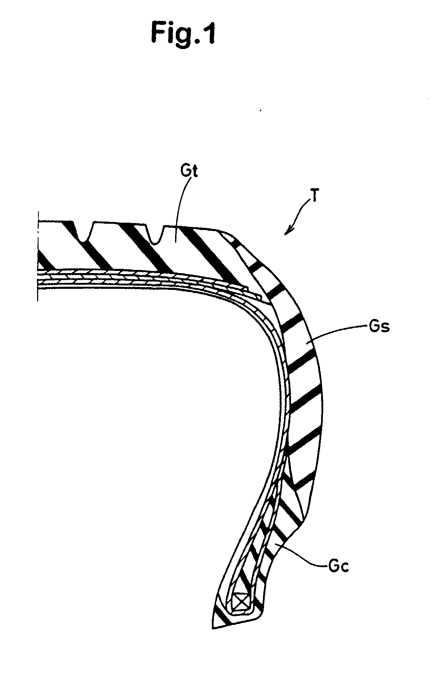

In Fig.1, a typical pneumatic tyre T for passenger cars is shown. The tyre T has a tread portion, a pair of sidewall portions and a pair of bead portions, and comprises a tread rubber Gt disposed in the tread portion, a sidewall rubber Gs disposed in each sidewall portion, and a clinch rubber Gc disposed in each bead portion and extending into a lower part of the sidewall portion.

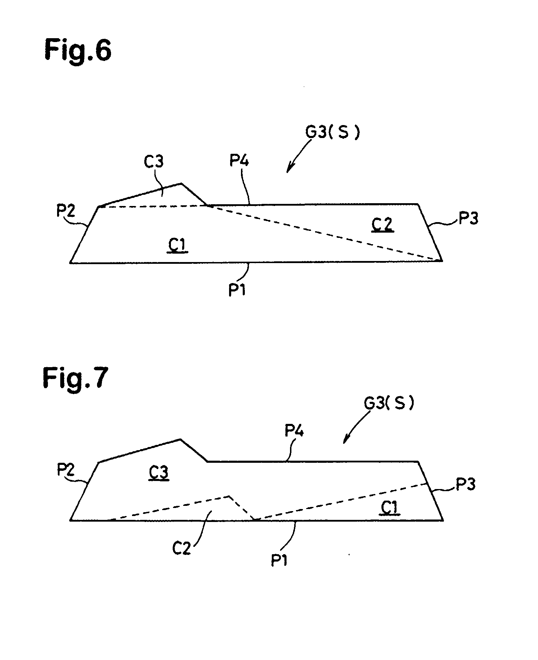

Of course the tread rubber Gt, sidewall rubber Gs and clinch rubber Gc have different cross sectional shapes in the unvulcanised states. For example, the raw sidewall rubber G1 has a polygonal shape like a trapezoid shown in Fig.2A, the raw tread rubber G2 has a trapezoidal shape shown in Fig.4, and the raw clinch rubber G3 has a polygonal shape shown in Fig.6.

These cross sectional shapes have a bottom P1 which is substantially straight and is the longest side, and at least one, usually two oblique sides P2 and P3 in common. Each oblique side P2 or P3 extends from one end of the bottom P1 and inclines towards the other end.

At least one of the oblique sides P2 and P3 is a joint surface utilised in the assembled tyre to splice to an adjacent rubber layer or component and at the same time this functions as a locating face. Therefore, it is necessary to form the oblique sides P2 and P3 with accuracy.

Next, taking the sidewall rubber G1 as an example, a method of making a rubber tyre component is described in detail.

First, the target finished cross sectional shape S of the rubber component is divided into a plurality of winding regions Ai (i is a suffix number) as shown in Fig.2A. Preferably, the winding regions Ai include a winding region A1 having a substantially triangular shape one side of which is defined by the whole of the oblique side P2 which contacts with the adjacent rubber component to be spliced. In the example shown in Fig.2A, the shape S has: a longest straight bottom P1; two oblique sides P2 and P3 each extending from one of the ends of the bottom P1, inclining towards the centre in the widthwise direction thereof; and a concave top P4 extending between the upper ends of the oblique sides P2 and P3 and made up of three straight segments.

Along a straight dividing line K which is drawn obliquely from the top P4 to the bottom P1 along one of the segments, the shape S is asymmetrically divided into a first winding region A1 and a second winding region A2.

The first winding region A1 has a scalene triangular shape made up of the whole of the oblique side P2, a most or greater part P1b of the bottom P1, the oblique segment P4a and the dividing line K.

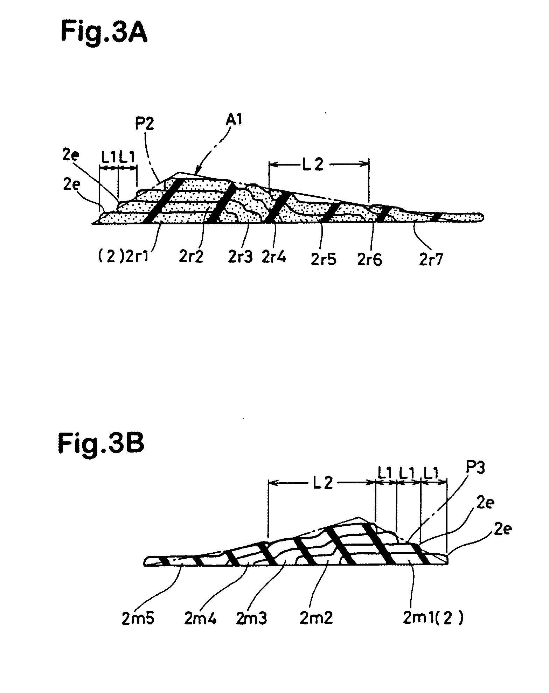

The second winding region A2 has an irregular polygonal shape made up of the whole of the oblique side P3, the oblique segment P4b and central segment of the top P3, a small part P1a of the bottom P1, and the dividing line K. This shape however, becomes a substantially scalene triangular shape, when bent as shown in Fig.3B, or when winding a raw rubber tape 2 separately from the first winding region A1. This shape is so determined.

Next, a raw rubber tape 2 is lap-wound to till the divided winding regions Ai in a predetermined sequence or at the same time.

It is important that the edges 2e of the tape windings adjacent to the oblique sides P2 and P3 come to the oblique sides P2 and P3 and are arranged like stairs. In other words, the edges 2e are arranged in line with the oblique sides P2 and P3 as shown in Fig.2B.

As mentioned above, when adjacent rubber components are spliced together , the rubber components are placed so that the oblique sides contact each other and they are pressed to adhere each other. As the edges 2e concentrate on the oblique sides, it becomes possible to decreases the number of edges coming out in the outer surface of the tyre.

Fig.2B shows an example of the raw sidewall rubber G1 formed by lap-winding a single rubber tape 2. In this example, the first winding region A1 having a scalene triangular shape is filled first, and then the second winding region A2 having a substantially scalene triangular shape is filled next.

In the first winding region A1, as shown in Fig.3A, from the 1st winding 2r1 to the 4th winding 2r4, the windings are gradually shifted towards the opposite side at small pitches L1. But after the windings reaches to the upper end of the oblique side P2, the winding pitches L2 are increased. Therefore, the rubber tape 2 is lap-wound in a substantially scalene triangular shape.

After the first winding region A1 is filled with the rubber tape 2, the tape 2 is continuously wound to fill the second winding region A2.

In the second winding region A2, as shown in Figs.2B and 3B, from the 1st winding 2m1 to the 4th winding 2m4, the windings are gradually shifting at small pitches L1. But after the windings reaches to the upper end of the oblique side P3, the winding pitches L2 are increased. Therefore, the rubber tape 2 is lap-wound in a substantially scalene triangular shape.

In practice, the raw rubber tape 2 is wound on a substantially cylindrical surface of a drum 5, or a substantially cylindrical surface of another tyre component or sub-assembly such as carcass previously wound on a tyre building drum 5.

Thus, in the target cross sectional shape S of a rubber tyre component 1, the bottom P1 is defined as a side which abuts on such a substantially cylindrical surface. And the oblique side P2, P3 is defined as a side which inclines at an acute angle with respect to the substantially cylindrical surface.

The above-mentioned raw rubber tape 2 is made by means of an extruder and is formed in a generally rectangular shape which is long from side to side. Depending on the finished cross sectional shape of the rubber component, various shapes, e.g. a shape tapered towards the both sides in its widthwise direction, a trapezoid, an isosceles triangle, and the like can be used. In case of a substantially rectangular shape, it is also possible to decrease the thickness at the ends in its widthwise direction.

It is preferable that the rubber tape 2 has a width of 10 to 30 mm and a thickness of 0.5 to 1.5 mm in the case of passenger car tyres in particular.

Fig.4 shows another example of the rubber component which is a raw tread rubber G2. In this example, the finished cross sectional shape S of the rubber tyre component is a trapezoid. It is divided into two triangular winding regions B1 and B2 each including one of the oblique sides P2 and P3 as one side. In the same manner as the above-mentioned sidewall rubber G1, a single rubber tape 2 is first wound along the oblique side P2 and then wound moving towards the other oblique side P3 as indicated by an arrow ①. When the rubber tape 2 reaches to the opposite oblique side P3 and thus the first winding region B1 is filled, the rubber tape 2 is continuously wound along this oblique side P3 and then returns toward the side P2 as indicated by an arrow ② until it reaches to the side P2. Thus the second winding region B2 is filled continuously from the first winding region B1.

Fig.5 shows another example of the division of the finished cross sectional shape S of the same tread rubber G2. In this example, the shape S is divided into three triangular winding regions B1, B2 and B3. The rubber tape 2 is wound sequentially as indicated by arrows ①, ②and ③.

In every winding region in these two cases, the rubber tape 2 is wound along the oblique side P2 or P3 such that the edges 2e of the windings are in line with the oblique side as explained above.

In Fig.5, the whole of the oblique side P2 is included in the second winding region B2 as one side. But the oblique side P3 is included in the first and third winding regions B1 and B3 as one side. Such division is also possible as far as the rubber tape 2 is wound such that the edges 2e of the windings becomes in line with the oblique side P3. This is applied to all rubber components not only the example shown in Fig.5.

In the case of a tread rubber G2 for belted radial tyres, the rubber tape 2 is usually wound around a belt which is previously wound on a belt drum 5. However, when the present invention is applied to retreading a used tyre, the rubber tape 2 can be wound directly around a butted substantially cylindrical surface of the tyre from which the old tread rubber is removed.

Fig.6 further shows another example of a rubber tyre component which is the raw clinch rubber G3. In this example, the finished cross sectional shape S is an irregular polygon, and it is divided into a trapezoidal winding regions C1, a large triangular winding regions C2 and a small triangular winding regions C3, each of the regions C1 and C2 including the whole of one oblique side P2 or P3 as one side.

Fig.7 shows another example of the division of the finished cross sectional shape S of the same clinch rubber G3. In this example, the shape S is divided into three winding regions C1-C3.

Also in these two cases, the rubber tape 2 is wound along the oblique side P2 and P3 such that the edges 2e of the windings are in line with the oblique side as explained above.

During winding the rubber tape 2 is always wound such that the edges 2e become in line with the straight oblique side P2 or P3 and then the winding pitches L1 are a substantially constant value. But, after the winding reaches to the upper end, the winding pitches L2 may be varied widely.

In a winding region, the tape 2 is usually wound in one way motion from the oblique side to the opposite side. But, it is also possible to wind the tape in back-and-forth motions after the winding in line with the oblique side is finished.

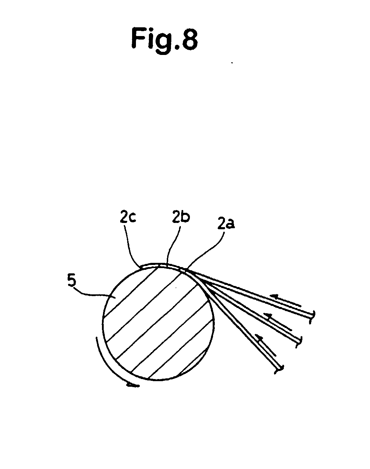

In order to improve production efficiency, it is possible to wind a plurality of rubber tapes 2 at the same time to fill the respective winding regions as shown in Fig.8. In this case, a plurality of tape feeders (not shown) are prepared, and the supplied tapes 2a, 2b and 2c are wound from circumferentially different start positions on the drum 5. The tape feeders, drum 5 and the like are controlled by a computer system in which the data of the finished cross sectional shape of the rubber component, the winding regions, the winding pitches of the rubber tapes 2 and programs are stored to make the rubber component automatically. Further, it is possible to wind materially different rubber tapes at the same time to make one rubber component. Furthermore, it is possible to change the cross sectional shape of the rubber tape between the winding regions.

The above-explained method of manufacturing rubber tyre components can be used to make various rubber tyre components, e.g. a bead apex in addition to the sidewall rubber G1, tread rubber G2 and clinch rubber G3.

Further, the method can be employed in various tyres including pneumatic tyres, solid tyres, and the like. But it is suitably employed in pneumatic tyres for passenger cars, RV, light trucks and the like.

Therefore, taking such a relatively small sized pneumatic tyre, in particular a radial tyre as an example, a method of manufacturing a tyre according to the present invention now will be described.

The tyre manufacturing method comprises the steps of winding sidewall rubbers G1 on a cylindrical winding surface of a tyre building drum 5; winding clinch rubbers G3 on the cylindrical winding surface axially inwards of the sidewall rubbers G1; winding a wide thin rubber sheet for an inner liner on the cylindrical winding surface between the clinch rubbers G3, (the sidewall rubbers G1, clinch rubbers G3 and inner liner rubber can be wound at the same time); winding a carcass on the inner liner rubber and clinch rubbers G3; setting bead cores or winding bead wires to form bead cores on the carcass; winding other tyre components such as bead apex rubber, reinforcing layer and the like, on the carcass and/or sidewall rubbers; expanding the drum such that the carcass between the bead cores becomes a toroidal shape and setting a belt and a tread rubber G2 on the radially outside of the carcass, (the belt and tread can be made an annular assembly by winding a belt on a belt drum 5 and then winding a tread rubber G2); turning up the carcass edges around the bead cores together with the clinch rubbers and sidewall rubbers and connecting the sidewall rubbers to the tread rubber; and vulcanising the assembled raw tyre in a mould.

In the tyre manufacturing method according to the present invention, it is possible to make all the rubber components by winding rubber tapes 2. But it is not always necessary. For example, it is possible to make only the sidewall rubbers by winding rubber tapes 2.

Further, it is also possible to form a large-sized tyre component by combining the above-explained lap-wound rubber tape with a rubber strip having a module size which is very large in comparison with the tape. For example, in the case of a tyre component having a trapezoidal shape, a central major portion thereof can be formed by a large rubber strip, and the tapered edge portions are then made by winding rubber tapes. Accordingly, the number of windings is greatly reduced. Further, as the large-sized rubber strip has a module size, it can be used for various components in common. As a results, the working efficiency and production efficiency can be greatly improved.

### Comparison Test

Three types of sidewall rubbers were made by the following three methods:
1) lap-winding a rubber tape as shown in Fig.2B according to the present invention;
2) conventional extrusion (Fig.9);
3) winding a rubber tape continuously from one end to the other end as shown in Fig.10 according to the prior art.

The target finished cross sectional shape is shown in Fig.2A.

Using the above-mentioned three types of sidewall rubbers, test tyres (Example, Conventional and Prior-art) of size 195/65R15 were experimentally manufactured and checked for bareness of rubber. The results are shown in the following Table 1.

**Table 1**

| Tyre | Conv. | Prior | Ex. |
|---|---|---|---|
| Sidewall rubber | Fig.9 | Fig.8 | Fig.2B |
| Occurrence of bareness(%) | 0.05 | 0.13 | 0.05 |

It was confirmed from the test results that, in comparison with the Prior Art method, the occurrence of bareness can be effectively decreased to the same level as the conventional method.

## Claims

1. A method of manufacturing a rubber component for tyres, the rubber component having a joint surface (P2 or P3) and a cross sectional shape (5), the method being characterised by the steps of dividing the cross sectional shape (5) into a plurality of winding regions (An,Bn), the divided winding regions including
(a) a region which includes the whole of the joint surface (P2), or
(b) a plurality of regions each including a part of the joint surface but collectively the whole, and winding a raw rubber tape (2) to fill the winding regions so that edges (2e) of windings of the rubber tape are in line with the joint surface (P2 or P3).

2. A method according to claim 1, characterised in that the rubber component has a plurality of joint surfaces (P2,P3), the divided winding regions include
(c) regions each including the whole of one of the joint surfaces, or
(d) a region including the whole of one of the joint surfaces and a set of regions each including a part of another joint surface but collectively including the whole, or
(e) a plurality of regions each including a part of one of the joint surfaces but collectively including all the joint surfaces.

3. A method according to claim 1, characterised in that the rubber component has two joint surfaces (P2,P3), the divided winding regions include
(f) two regions each including the whole of one of the two joint surfaces, or
(g) one region including the whole of one of the two joint surfaces and a set of regions each including a part of the other joint surface but collectively including the whole, or
(h) a plurality of regions each including a part of one of the two joint surfaces but collectively including all of the two joint surfaces.

4. A method according to claim 1, 2 or 3, characterised in that all of the divided winding regions are filled with a single continuous rubber tape.

5. A method according to claim 1, 2 or 3, characterised in that at least two of the divided winding regions are filled with at least two rubber tapes, respectively.

6. A method according to any of claims 1 to 5, characterised in that the rubber tape (2) has a width of from 10 to 30 mm and a thickness of from 0.5 to 1.5 mm.

7. A method of manufacturing a tyre which includes the method of manufacturing the rubber component as set forth in any of claims 1 to 6.
